Europäisches Patentamt

European Patent Office

Office européen des brevets

(11) Publication number: **0 030 057**
**A1**

## EUROPEAN PATENT APPLICATION

(21) Application number: **80201111.4**

(22) Date of filing: **22.11.80**

(51) Int. Cl.³: **D 21 C 5/02**

(30) Priority: **29.11.79 NL 7908641**

(43) Date of publication of application:
**10.06.81 Bulletin 81/23**

(84) Designated Contracting States:
**AT BE CH DE FR GB LI NL SE**

(71) Applicant: **CHEM-Y, FABRIEK VAN CHEMISCHE
PRODUCTEN B.V.
Wilhelminastraat 33
NL-2411 CW Bodegraven(NL)**

(72) Inventor: **Van den Haak, Gerardus Maria
Reigeroord 3
NL-2411 LD Bodegraven(NL)**

(74) Representative: **Pinckaers, August René et al,
OCTROOIBUREAU DSM Postbus 9
NL-6160 MA Geleen(NL)**

(54) Method of deinking paper pulp and paper products obtained employing this method.

(57) Deinking paper pulp using a phosphate ester of a monohydric alcohol with 8-22 carbon atoms, or a mixture of such
esters, as collector during flotation.

EP 0 030 057 A1

CHEM-Y FABRIEK VAN CHEMISCHE PRODUCTEN B.V.

1

## METHOD OF DEINKING PAPER PULP AND PAPER PRODUCTS OBTAINED EMPLOYING THIS METHOD

This invention relates to a method of deinking paper pulp by flotation employing a collector.

A method of this kind, which is of great importance for the preparation of paper stock from waste paper, is e.g. known from Dutch Patent Application 7700322. Fatty acids or mixtures of fatty acids are mentioned in this publication as usual collectors. The periodical Pulp Paper Int. of June 1978 pages 64-65 describes the use of fatty-acid soaps as collector in the deinking of paper pulp by flotation.

A collector has now been discovered which yields important advantages in the deinking of paper pulp by flotation.

The method according to the invention for the deinking of paper pulp by flotation employing a collector is characterized by use of a phosphate ester of a monohydric alcohol with 8-22 carbon atoms or a mixture of such esters as collector during flotation.

Application of the method according to the invention, which can start from a paper pulp obtained either by alkaline or by acid pulping, has a very favourable influence on the whiteness of the fibrous material obtained, while the flotation of the fibres is considerably less. The same results can be obtained as by use of the known collectors when a larger amount of pulp or a pulp of lower quality is processed. Furthermore, in flotation according to the invention a good structure can be obtained for the foam produced, i.e. the foam produced is such that the ink particles adhere well to the foam during flotation, while after flotation the foam is so unstable that little or no defoaming agent need be used.

The phosphate esters to be used in the method according to the invention can be prepared by well known methods, e.g. (see U.S. Pat. No. 3,567,636) by reaction of a monohydric alcohol with 8-22 carbon atoms or a mixture of such alcohols with phosphorus pentoxide. This often gives a mixture of mono-ester and di-ester, e.g. in a ratio of 0.5-5 mol mono-ester per mol di-ester. Practically exclusively mono-ester can e.g. be obtained by reaction of the alcohol with pyrophosphoric acid (see Tenside Detergents Sept./Oct. 1971 page 237).

German Auslegeschrift 1,287,720 further mentions orthophosphoric acid, phosphorus trichloride, phosphorus oxychloride and similar compounds as reagents for the preparation of phosphate esters from alcohols.

The phosphate esters for use in the method according to the invention can be derived from various alcohols, e.g. aliphatic and aromatic alcohols. Examples of such alcohols are lauryl alcohol, oleyl alcohol, nonylphenol and the technical alcohols commercially available under the names 'Alfol', 'Dobanol' and 'Lorol'.

The method according to the invention is preferably carried out with a phosphate ester derived from a monohydric alcohol with 9-14 carbon atoms, or with a mixture of such esters.

Various amounts of collector can be used in the method according to the invention. Favourable results can often be obtained with an amount of 0.1-0.5 wt.% of collector calculated with respect to the amount of waste paper in the paper pulp. If desired, another collector may be used in addition to the collector according to the invention, e.g. the known collector oleic acid. Usual additives in deinking by flotation, such as bleach, dispersant and foaming agent, can be used in the method according to the invention.

It is important for good results in flotation according to the invention, as it is when known collectors are used, that the water to be used should be of sufficient hardness.
If desired, the hardness can be increased by addition of e.g. calcium chloride.

Flotation according to the invention can be carried out at the temperatures usual for this purpose, e.g. at a temperature of 30-60 °C.

In order to illustrate the invention, a number of experiments will now be described.

Experiments I-VI

In a laboratory pulper with a capacity of 5 litres, 40 g of paper (50 wt. % of photocopies and 50 wt. % of unlined computer paper) is pulped for 17 minutes in 2 litres of water (hardness 15 German degrees) 50 °C.

The pulp obtained is diluted with water (hardness 10 German degrees) at 45 °C to a concentration of 1 wt. %. Per gram of paper in the pulp, 12 mg of hydrogen peroxide solution (40 wt. %), 25 mg of aqueous sodium silicate solution (30 wt. %) and 6.8 mg of caustic soda lye (27 wt. %) are further added.The pH is then about 10.

The pulp is then stirred in a laboratory flotation cell for about 1 minute, after which 3.5 mg of collector is added per gram of paper in the pulp. The mixture is then stirred for 5 minutes, followed by flotation for 6 minutes.

The reject obtained after flotation is filtered off and dried at 60 °C. After 24 hours acclimatization, the weight is determined and expressed in wt. % with respect to the weight of the original amount of paper.

The deinked pulp obtained is diluted with water by adding water to 300 ml of deinked pulp until a total volume of 1 litre is obtained; the mixture is then stirred for 2 minutes, after which the fibres are filtered off on a sieve plate. After drying of the fibres with the aid of a press and acclimatization of the paper obtained in this way, the whiteness of the paper is determined in the usual way by measurement of the reflection with a reflectometer (Photovolt Reflector Meter model 670) .employing an amber filter and a blue filter.

The results of the experiments are given in the following table.

| Experiment | Collector | Reflection in % | Reject wt. % |
|---|---|---|---|
| I | - | 77.1 | 16.6 |
| II | Olinor-O 42 | 76.9 | 11.3 |
| III | C-9-11 ester | 78.0 | 5.0 |
| IV | C-12-13 ester | 77.8 | 3.4 |
| V | 30 wt. % Olinor-O 42 70 wt. % C-9-11 ester | 77.8 | 4.2 |
| VI | 30 wt. % Olinor-O 42 70 wt. % C-12-13 ester | 79.4 | 2.6 |

No collector was used in experiment 1.

Olinor-O 42 is a mixture of fatty acids commercially avaible under that name.

C-9-11 ester is the phosphate ester (1.40 mol mono-ester per

mol di-ester) of a C-9-11 alcohol commercially available under the name
Dobanol 91.

C-12-13 ester is the phosphate ester (1.69 mol mono-ester per mol
di-ester) of a C-12-13 alcohol commercially available under the name
Dobanol 23.

It may be seen from the table that in experiments III-VI, where the
collector according to the invention is used, the reflection is appreciably improved while the amount of reject is appreciably less. In order
to obtain the same whiteness as in experiment VI without use of collector
but with the other conditions remaining the same, one would have to add
20 g of cellulose per 100 g of fibrous material in the deinked pulp.

CLAIMS

1. Method of deinking paper pulp by flotation employing a collector, characterized by use of a phosphate ester of a monohydric alcohol with 8-22 carbon atoms, or a mixture of such esters, as collector during flotation.

2. Method according to claim 1, characterized by use of a phosphate ester of a monohydric alcohol with 9-14 carbon atoms or a mixture of such esters as collector.

3. Paper products wholly or partly made from waste paper employing the method according to one of the previous claims.

0030057

European Patent
Office

**EUROPEAN SEARCH REPORT**

Application number

EP 80 20 1111

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | US - A - 1 988 363 (F.H. SNYDER)<br><br>* Page 1, left-hand column, lines 1-40; right-hand column, lines 3-13; page 2, left-hand column, lines 17-38 *<br><br>-- | 1,3 | D 21 C 5/02 |
| | US - A - 3 986 922 (E.T. PARKER et al.)<br><br>* Entire document *<br><br>-- | 1,3 | |
| A | DE - B - 1 175 623 (KLOCKNER-HUM-BOLDT-DEUTZ)<br><br>* Column 1, lines 1-42 *<br><br>---- | 1 | TECHNICAL FIELDS SEARCHED (Int. Cl.³)<br><br>B 03 D 1/00<br>D 21 C 5/02 |

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-01-1981 | NESTBY |

EPO Form 1503.1   06.78